# EUROPÄISCHE PATENTANMELDUNG

(11) **EP 1 752 216 A1**
(43) Veröffentlichungstag der Anmeldung: **14.02.2007**
(21) Anmeldenummer: 05017324.4
(22) Anmeldetag: 09.08.2005
(51) Int. Cl.: B01J 21/06, B01J 35/00, B01J 37/34

(54) **Verwendung von Titandioxid-Mischoxid als Photokatalysator**

(71) Anmelder: Degussa AG, 40474 Düsseldorf (DE)
(72) Erfinder: Vormberg, Reinhard, Dr., 63543 Neuberg (DE); Schumacher, Kai, Dr., 65719 Hofheim (DE)

(57) **Zusammenfassung**

Verwendung von Titandioxid-Mischoxid als Photokatalysator, wobei das Titandioxid-Mischoxid folgende Merkmale aufweist:
- BET-Oberfläche: 5 bis 300 m²/g aufweist,
- Mischoxidkomponente: ein oder mehrere Oxide aus der Gruppe umfassend Aluminium, Cer, Silicium, Wolfram, Zink, Zirkon
- Anteile:
- Titandioxid mehr als 97,5 Gew.-%,
- Mischoxidkomponente ≥ 0,1 bis < 2 Gew.-%,
- Summe der Anteile von Titandioxid und Nebenkomponente mindestens 99,5 Gew.-%,

jeweils bezogen auf die Gesamtmenge des Mischoxides,
- Titandioxid-Anteil der Primärpartikel umfassend miteinander verwachsene Rutil- und Anatasphasen.

## Beschreibung

Die Erfindung betrifft die Verwendung von Titandioxid-Mischoxid als Photokatalysator.

Aus EP-A-778812 sind durch Umsetzung von Titantetrachlorid und einem Chlorid von Silicium, Germanium, Bor, Zinn, Niob, Chrom, Aluminium, Gold, Silber, Palladium in einer Flamme erzeugte Titandioxid-Mischoxidpartikel für photokatalytische Verwendungen bekannt. Von besonderer Bedeutung sind dabei Silicium- und Aluminium-Titan-Mischoxidpartikel. Es wird offenbart, dass solche Mischoxidpulver mit einem Gehalt an Siliciumdioxid von ca. 5 bis 10 Gew.-% nicht optimal für photokatalytische Zwecke sind. Weiter wird ausgeführt, dass der Anatas-Gehalt und damit die photokatalytische Aktivität in solchen Mischoxidpulvern mit steigendem Anteil an Siliciumdioxid zunimmt. Aus diesen Aussagen ist zu folgern, dass eine photokatalytische Aktivität erst ab 10 % Siliciumdioxid-Anteil merklich auftritt.

Aus DE-A-10260718 sind mit Siliciumdioxid umhüllte Titandioxidpartikel mit einem Siliciumdioxid-Anteil von 0,5 bis 40 Gew.-% bekannt. Die Partikel weisen eine niedrige photokatalytische Aktivität auf und werden daher bevorzugt in Sonnenschutzformulierungen eingesetzt.

In DE-A-4235996 werden Silicium-Titan-Mischoxidpartikel mit einem Siliciumdioxid-Anteil von 1 bis 30 Gew.-%, bezogen auf das Mischoxid beschrieben. Das Mischoxid weist eine hohe Temperaturbeständigkeit auf, der Siliciumdioxid-Anteil jedoch reduziert die photokatalytische Aktivität.

Aus WO03/037994 sind mit den Oxiden von Silicium, Aluminium, Cer und/oder Zirkon beschichtete Titandioxidpartikel bekannt. Die Beschichtung führt zu einem effektiven Schutz vor photokatalytischen Reaktionen. Die Partikel werden erhalten, indem eine Vorstufe von Siliciumdioxid in Gegenwart eines oberflächenmodifizierenden Stoffes auf Titandioxidpartikel gefällt und gegebenenfalls hydrothermal nachbehandelt werden. Der Anteil von Siliciumdioxid, bezogen auf Titandioxid, beträgt 0,1 bis 10 Gew.-%. Bereits ab 0,1 Gew.-% wird eine merkliche Verringerung der photokatalytischen Aktivität beobachtet.

Aus EP-A-988853 und EP-A-1284277 sind mit Siliciumdioxid umhüllte Titandioxidpartikel bekannt, bei denen eine Siliciumdioxidhülle zu einer Reduzierung der photokatalytischen Aktivität führt. Die Partikel finden daher hauptsächlich in Sonnenschutzformulierungen Verwendung.

Die technische Lehre, die der Stand der Technik vermittelt, ist die, dass Mischoxidkomponenten neben Titandioxid zu einer Verringerung der photokatalytischen Aktivität führen.

Der vorliegenden Erfindung lag die Aufgabe zugrunde, ein für die Verwendung als Photokatalysator geeigneten Stoff bereitzustellen.

Gegenstand der Erfindung ist die Verwendung eines Titandioxid-Mischoxides als Photokatalysator, wobei das Titandioxid-Mischoxid folgende Merkmale aufweist:
- BET-Oberfläche: 5 bis 300 m²/g aufweist,
- Mischoxidkomponente: ein oder mehrere Oxide aus der Gruppe umfassend Aluminium, Cer, Silicium, Wolfram, Zink, Zirkon
- Anteile:
   - Titandioxid mehr als 97,5 Gew.-%,
   - Mischoxidkomponente ≥ 0,1 bis < 2 Gew.-%,
   - Summe der Anteile von Titandioxid und Nebenkomponente mindestens 99,5 Gew.-%,
   jeweils bezogen auf die Gesamtmenge des Mischoxides,
- Titandioxid-Anteil der Primärpartikel umfassend miteinander verwachsene Rutil- und Anatasphasen.

Bevorzugt kann ein Titandioxid-Mischoxid verwendet werden, welches mehr als 98,5 Gew.-% und ≥ 0,2 bis < 1 Gew.-% der Mischoxidkomponente enthält. Besonders bevorzugt kann ein Titandioxid-Mischoxid verwendet werden, welches mehr als 99,0 Gew.-% Titandioxid und ≥ 0,3 bis < 0,5 Gew.-% der Mischoxidkomponente enthält.

Mischoxid im Sinne der Erfindung umfasst das Mischoxid in Form eines Pulver, in einer Dispersion oder als Beschichtungsbestandteil eines beschichteten Substrates.

Die Dispersion kann als flüssige Phase Wasser und/oder ein organisches Lösungsmittel oder Lösungsmittelgemisch aufweisen. Der Gehalt an Titandioxid-Mischoxid in der Dispersion kann bis zu 70 Gew.-% betragen. Die Dispersion kann weiterhin dem Fachmann bekannte Additive zur Einstellung des pH-Wertes sowie oberflächenaktive Stoffe enthalten.

Das beschichtete Substrat kann bevorzugt erhalten werden, indem man die Dispersion auf ein Substrat, beispielsweise Glas oder ein Polymer, aufbringt und nachfolgend thermisch behandelt.

Die Anzahl der Mischoxidkomponenten neben Titandioxid beträgt bevorzugt 1 oder 2 und besonders bevorzugt 1.

Die BET-Oberfläche des Titandioxid-Mischoxides wird entsprechend der DIN 66131 bestimmt. Bevorzugterweise liegt die BET-Oberfläche des Titandioxid-Mischoxides bei 40 bis 120 m²/g.

Unter Mischoxid ist die innige Vermischung von Titandioxid und der weiteren oder den weiteren Mischoxidkomponenten X₁, X₂, ....Xₙ auf atomarer Ebene unter Bildung von X₁-O-Ti-, X₂-O-Ti, ... Xₙ-O-Ti-Bindungen zu verstehen. Daneben können die Primärpartikel auch Bereiche aufweisen, in denen die Mischoxidkomponenten neben Titandioxid vorliegen.

Unter Primärpartikel sind kleinste, nicht ohne das Brechen von chemischen Bindungen weiter zerteilbare Partikel zu verstehen. Diese Primärpartikel können zu Aggregaten verwachsen. Aggregate zeichnen sich dadurch aus, dass ihre Oberfläche kleiner ist als die Summe der Oberflächen der Primärpartikel aus denen sie bestehen. Titandioxid-Mischoxide mit einer niedrigen BET-Oberfläche können ganz oder überwiegend in Form von nichtaggregierten Primärpartikeln vorliegen, während Titandioxid-Mischoxide mit hoher BET-Oberfläche einen höheren Aggregationsgrad aufweisen oder vollständig aggregiert vorliegen können.

Durch Auszählung aus TEM-Aufnahmen (TEM = Transmissions-Elektronenmikroskopie) in Verbindung mit EDX (Energy Dispersive X-ray Analysis, energiedispersive Röntgenspektroskopie) wird gefunden, dass Primärpartikel mit X-O-Ti-Bindungen mit einem Anteil von mindestens 80%, bezogen auf die Gesamtmenge des Titandioxid-Mischoxides, vorliegen. In der Regel beträgt der Anteil mehr als 90%, insbesondere mehr als 95%.

Die Summe der Anteile von Titandioxid und den weiteren Mischoxidkomponenten beträgt, bezogen auf die Gesamtmenge des Mischoxides, mindestens 99,5 Gew.-%. Darüberhinaus kann das Titandioxid-Mischoxid Spuren von Verunreinigungen aus den Ausgangsstoffen, wie auch durch den Prozess hervorgerufene Verunreinigungen aufweisen. Diese Verunreinigungen können maximal bis zu 0,5 Gew.-%, in der Regel jedoch nicht mehr als 0,3 Gew.-%, betragen.

Der Anteil der Mischoxidkomponenten, bezogen auf die Gesamtmenge des Mischoxides, beträgt von ≥ 0,1 bis < 2 Gew.-%. Titandioxid-Mischoxide mit Anteilen, neben Titandioxid, von kleiner als 0,1 Gew.-% zeigen eine vergleichbare Photoaktivität wie ein Titandioxid mit vergleichbaren Merkmalen. Bei Anteilen von mehr als 1 Gew.-% ist bereits mit einer abnehmenden Photoaktivität zu rechnen.

Die kristallinen Rutil- und Anatas-Anteile im Titandioxid-Mischoxid können Lichtquanten absorbieren, wodurch ein Elektron aus dem Valenzband in das Leitungsband promoviert wird. Bei Rutil liegt der Abstand zwischen Valenz- und Leitungsband bei 3,05 eV entsprechend einer Absorption bei 415 nm, bei Anatas beträgt der Abstand 3,20 eV entsprechend einer Absorption bei 385 nm. Wandern die freien Elektronen an die Oberfläche, können sie dort eine photokatalytische Reaktion auslösen.

Die erfindungsgemäße Verwendung setzt ein Titandioxid-Mischoxid voraus, bei dem die Primärpartikel eine Rutil- und Anatasphase aufweisen. Dieses Merkmal ist wesentlich um eine hohe photokatalytische Aktivität zu erzielen. Eine mögliche Ursache für diesen Effekt könnte sein, dass die von dem Rutil-Anteil aufgefangenen Quanten an den Anatas-Anteil weitergeleitet werden, wodurch die Wahrscheinlichkeit reaktionsfähige Elektronen an der Oberfläche zu generieren, steigt.

Bevorzugt kann ein Titandioxid-Mischoxid mit einem Rutil/Anatas-Verhältnis von 1/99 bis 99/1 verwendet werden. Besonders bevorzugt sind Titandioxid-Mischoxide in denen die Anatasphase überwiegt. Insbesondere können dies Rutil/Anatas-Verhältnisse von 40/60 bis 5/95 sein.

Die neben Titandioxid vorliegende Mischoxidkomponente kann amorph und/oder kristallin vorliegen.

Bevorzugt kann ein Titan-Silicium-Mischoxid verwendet werden, wobei der Siliciumdioxidanteil amorph ist.

Die Struktur des verwendeten Titandioxid-Mischoxides kann vielfältig sein. So kann es in Form aggregierter Primärpartikel vorliegen oder es können einzelne, nicht aggregierte Primärpartikel vorliegen. Die Mischoxidkomponente kann statistisch über den Primärpartikel verteilt sein oder, insbesondere für Siliciumdioxid, in Form einer Hülle um einen Titandioxidkern angeordnet sein.

Bevorzugt kann pyrogen hergestelltes Titandioxid-Mischoxid verwendet werden. Unter pyrogen hergestelltem Titandioxid-Mischoxid im Sinne der Erfindung ist eines zu verstehen, welches durch Umsetzung von hydrolysierbaren und/oder oxidierbaren Ausgangsverbindungen in Gegenwart von Wasserdampf und/oder Sauerstoff in einer Hochtemperaturzone erhalten wird. Das so hergestellte Titandioxid-Mischoxid besteht aus Primärpartikeln, welche keine innere Oberfläche aufweisen und an ihrer Oberfläche Hydroxylgruppen tragen.

### Beispiele:

### A. Herstellung der Titandioxid-Mischoxide

Beispiel 1: Es werden 4,1 kg/h TiCl₄ und 0,05 kg/h SiCl₄ verdampft. Die Dämpfe werden mittels Stickstoff zusammen mit 2,0 Nm³/h Wasserstoff und 9,1 Nm³/h getrockneter Luft in der Mischkammer eines Brenners bekannter Bauart gemischt, und über ein Zentralrohr, an dessen Ende das Reaktionsgemisch gezündet wird, einem wassergekühlten Flammrohr zugeführt und dort verbrannt.

Das entstandene Titandioxid-Mischoxid wird anschließend in einem Filter abgeschieden. Durch eine Behandlung mit feuchter Luft bei ca. 500-700°C wird anhaftendes Chlorid entfernt.

Das Beispiel 2 wird analog Beispiel 1 durchgeführt. Die Ansatzgrößen und die experimentellen Bedingungen der Beispiele 1 und 2 sind in Tabelle 1, die physikalischechemischen Eigenschaften sind in Tabelle 2 wiedergegeben.

Pulver 3 und 4 sind pyrogen hergestellte Titandioxidpulver.

### B. Photokatalytische Aktivität

Die Pulver 1 bis 4 werden hinsichtlich ihrer photokatalytischen Aktivität bezüglich des Fettsäureabbaus untersucht.

Als Testsubstanz wird Stearinsäuremethylester (kurz: Methylstearat), gelöst in n-Hexan, eingesetzt. Da diese Substanz für die Aktivitätstests als dünner Fettfilm auf die zu testende Oberfläche aufgetragen wird, wird zunächst aus den Pulvern 1 bis 4 eine Schicht auf dem Trägermaterial Glas hergestellt.

Hierzu wird eine Dispersion aus je 120 mg der Pulver 1 bis 4 in 2 ml Isopropanol hergestellt und auf eine Glasfläche von 4 x 9 cm aufgetragen. Die Schichten werden anschließend bei 100°C für 60 min im Muffelofen getempert.

Auf die erhaltenen Schichten wird eine definierte Menge einer Methylstearat-Lösung (5 mmol/l) in n-Hexan aufgetragen und diese zunächst für 15 Minuten mit 1,0 mW/cm² UV-A Licht bestrahlt.

Für die Bestimmung werden je ca. 500 µl einer Methylstearat-Lösung (5 mmol/l) in n-Hexan auf die Mischoxid-Schichten aufgetragen , so dass sich bezogen auf die Abwaschmenge (5ml n-Hexan) eine Konzentration von ca. 0,5 mmol/l ergibt. Die mittels Gaschromatographie (FID) ermittelten Werte finden sich in Tabelle 3.

Nach Ende der Bestrahlung wird das auf den Mischoxid-Schichten verbliebene Methylstearat mit 5 ml n-Hexan abgewaschen und mit Hilfe der Gaschromatographie (FID) mengenmäßig bestimmt.

Der Vergleich mit einem zuvor ermittelten Referenzwert, bestimmt durch Auftragen der definierten Menge Methylstearat und sofortiges Abwaschen der Methylstearatschicht mit n-Hexan ohne vorherige Bestrahlung, gibt Aufschluss über die photokatalytische Aktivität der Schichten.

Tabelle 3 zeigt die verbliebene Menge Methylstearat auf den TiO₂-Schichten nach 5 min Bestrahlung mit 1,0 mW/cm² UV-A Licht.

Als Referenz- bzw. Kontroll-Versuch wurde zum Abbau von Methylstearat exemplarisch das Pulver 2 ein "Dunkelversuch" eingesetzt.

Nach Auftragen von 500 µl der (Methylstearat in n-Hexan)-Lösung werden die Schichten für 1 Stunde in Dunkelheit verwahrt. Anschließend werden die Schichten mit 5 ml n-Hexan abgewaschen und die Methylstearatkonzentration mit Hilfe der Gaschromatographie bestimmt. Die Abbaurate ist mit 40 µM/h vernachlässigbar.

Die Bestimmung der Photoneneffizienz ist mit einem Fehler von max. 10% behaftet. Somit liegt die Abweichung des Dunkelversuchswertes zur Ausgangskonzentration (Referenzwert) im Rahmen der Messungenauigkeit. Folglich kann man die Abbauraten direkt in die entsprechenden Photoneneffizienzen umrechnen. Berechnungsgrundlage sind die Anfangsabbauraten der einzelnen Proben, also jeweils die nach der kürzesten Bestrahlungszeit bestimmten Raten.

Berechnung der Photoneneffizienz für Beispiel 3:
Photonenfluss bei 350nm, 36 cm² bestrahlter Fläche und 1,0 mW/cm²: 3,78*10⁻4 mol*hv*h-1
Analysiertes Volumen: 5 ml = 0,005 l
Abbaurate: 1520 µM/h * 0,005 l = 7,6*10⁻⁶ mol*h⁻¹
Photoneneffizienz = Abbaurate * Photonenfluss
Photoneneffizienz = 7,6*10⁻⁶ molh⁻¹ * 3,78*10⁻⁴ mol*hv*h⁻¹
   = 2,01 x 10⁻² = 2,01 %

Die Berechnung der Photoneneffizienz der Pulver der Beispiele 1,2 und 4 erfolgt analog. Die Ergebnisse sind in Tabelle 2 wiedergegeben.

Die Ergebnisse zeigen, dass bei Verwendung eines Titandioxid-Mischoxides mit den Merkmalen gemäß der Erfindung die photokatalytische Aktivität höher ist als bei Titandioxid mit vergleichbaren Merkmalen und vergleichbarem Herstellungsverfahren.

Es ist überraschend, dass sich Titan-Mischoxidpulvern mit einem Anteil der Mischoxid-Komponente von ≥ 0,1 bis < 2 Gew.-%, deren Titandioxid-Anteil miteinander verwachsene Rutil- und Anatasphasen aufweist, als wirksame Photokatalysatoren verwenden lassen. Der Stand der Technik würde nämlich nahe legen, dass die Mischoxid-Komponente zu einer Verringerung der photokatalytischen Aktivität führe n würde.

**Tabelle 1: Experimentelle Bedingungen bei der Herstellung der verwendeten Pulver 1 und 2**

| **Beispiel** | | **1** | **2** |
|---|---|---|---|
| TiCl₄ | kg/h | 4,1 | 4,1 |
| SiCl₄ | kg/h | 0,05 | 0,05 |
| H₂ | Nm³/h | 2,0 | 2,0 |
| Luft | Nm³/h | 9,1 | 14,0 |
| Sekundärluft | Nm³/h | 15 | 15 |

**Tabelle 2: Analytische Daten der verwendeten Pulver 1 bis 4**

| **Beispiel** | | **1** | **2** | **3** | **4** |
|---|---|---|---|---|---|
| TiO₂-Gehalt | Gew.-% | 99,41 | 99,46 | > 99,5 | > 99,5 |
| SiO₂-Gehalt | Gew.-% | 0,41 | 0,45 | < 0,002 | < 0,002 |
| BET | m²/g | 48 | 83 | 50 | 90 |
| Rutil/Anatas | | 39/61 | 24/76 | 20/80 | 10/90 |
| Photoneneffizienz | % | 3,3 | 5,2 | 2,01 | 4,4 |
| Photoaktivität*) | | 1,64 | 2,59 | 1 | 2,19 |

| | | | | | |
|---|---|---|---|---|---|
| *)bezogen auf Aeroxide® TiO₂ P25, Degussa = 1; | | | | | |

**Tabelle 3: Abbauraten von Methylstearat**

| **Pulver** | | **1** | **2** | **3** | **4** |
|---|---|---|---|---|---|
| c₀ Methylstearat | mmol/l | 0,46 | 0,48 | 0,43 | 0,4 |
| c₅ₘᵢₙ Methylstearat | mmol/l | 0,27 | 0,13 | 0,05*) | 0,12 |
| Abbaurate Methylstearat | µmol/lxh | 2520 | 3960 | 1520 | 3360 |

| | | | | | |
|---|---|---|---|---|---|
| *) c₁₅ₘᵢₙ anstelle von c₅ₘᵢₙ; | | | | | |

## Patentansprüche

1. Verwendung von Titandioxid-Mischoxid als Photokatalysator, wobei das Titandioxid-Mischoxid folgende Merkmale aufweist:
- BET-Oberfläche: 5 bis 300 m²/g aufweist,
- Mischoxidkomponente: ein oder mehrere Oxide aus der Gruppe umfassend Aluminium, Cer, Silicium, Wolfram, Zink, Zirkon
- Anteile:
- Titandioxid mehr als 97,5 Gew.-%,
- Mischoxidkomponente ≥ 0,1 bis < 2 Gew.-%,
- Summe der Anteile von Titandioxid und Nebenkomponente mindestens 99,5 Gew.-%, jeweils bezogen auf die Gesamtmenge des Mischoxids,
- Titandioxid-Anteil der Primärpartikel umfassend miteinander verwachsene Rutil- und Anatasphasen.

2. Verwendung nach Anspruch 1, **dadurch gekennzeichnet, dass** das Verhältnis Rutil/Anatas des Mischoxides 1/99 bis 99/1 beträgt.

3. Verwendung nach den Ansprüchen 1 oder 2, **dadurch gekennzeichnet, dass** das die Nebenkomponente des Mischoxides Siliciumdioxid ist.

4. Verwendung nach den Ansprüchen 1 bis 3, **dadurch gekennzeichnet, dass** das Titandioxid-Mischoxid ein pyrogen hergestelltes Titandioxid-Mischoxid ist.
